# EUROPEAN PATENT APPLICATION

(11) **EP 1 202 538 A2**
(43) Date of publication of application: **02.05.2002**
(21) Application number: 01125634.4
(22) Date of filing: 26.10.2001
(51) Int. Cl.: H04M 1/60

(54) **Portable information terminal device**

(30) Priority: 30.10.2000 JP 2000330687
(71) Applicant: Pioneer Corporation, Meguro-ku, Tokyo (JP)
(72) Inventor: Yoshida, Masao c/o Kawagoe Koujou, Pioneer Corp., Saitama-ken 350-8555 (JP)
(74) Representative: Sajda, Wolf E., Dipl.-Phys.

(57) **Abstract**

It is an object of the invention to realize an automatic change-over between a receiver and a loudspeaker. Data for reproducing a received talk by virtue of a loudspeaker (13) is stored in each remote person's telephone directory data table in a memory (7). A user is allowed to store the data by operating on an operating section (8) through a controller (5). When there is a telephone communication between the user and a remote person registered in the telephone directory data table, a change-over switch (6) is automatically changed over to a contact b in accordance with the stored data, thereby using the loudspeaker (13) to reproduce a talk received from a remote person. On the other hand, if there is a telephone communication between the user and a remote person not registered in the telephone directory data table, the change-over switch (6) is kept in contact with contact a, thereby using the receiver (12) to reproduce a talk received from the remote person.

## Description

### BACKGROUND OF THE INVENTION

### Field of the Invention

The present invention relates to a portable information terminal device such as a cellular telephone allowing a telephone communication.

The present application claims priority form Japanese Application No.2000-330687, the disclosure of which is incorporated herein by reference for all purposes.

### Description of the Related Prior Art

Recently, with spreading and increasing use of communication network, portable information terminal device such as cellular telephone has been equipped with more and more functions, capable of performing both telephone communication and data transmission/reception.

For example, a cellular telephone which could only be used for telephone communication has become possible to be connected with an internet, so that it can be used not only for telephone communication, but also for data communication.

Further, a conventional cellular telephone usually has a function capable of reproducing a received talk at a reduced volume using a receiver, and another function of reproducing a received talk at an increased volume using a loudspeaker.

Namely, when a user does not wish a received talk to be leaked to the outside, he or she can put the receiver of a cellular telephone tightly against one of his or her ears so as to hear the received tall without any voice leakage. On the other hand, when a received talk is to be written down, such a received talk can be reproduced at an increased volume using a loudspeaker, thereby allowing the user to hear the received talk without having to put the receiver against one of his or her ears.

Further, when character data is transmitted hereto along with a received talk, the received character data may be displayed on the display of a cellular telephone while at the same time the received talk may be reproduced at an increased volume using a loudspeaker. In this way, a user is allowed to hear the received talk while at the same time reading the character data, in a hands-free manner.

However, the aforementioned conventional cellular telephone usually has a change-over key which effects a change-over between a receiving function using the receiver and a loud-speaking function using a loudspeaker, so that a user is allowed to select his or her desired function by operating the change-over key.

In this manner, when a talk is received, a user can at first put the receiver of the telephone at one of his or her ears (to hear the received talk by means of the receiver). At this time, if the user thinks it necessary to reproduce the received talk at an increased volume, he or she has to operate the change-over key to select a loud-speaking mode using a loudspeaker.

In fact, the above-mentioned operation is considered to be troublesome for a user of a cellular telephone. Namely, even if a received talk is needed to be reproduced at an increased volume from the beginning, a user has to at first put his or her cellular telephone to one of his or her ears to confirm whether or not it is truly necessary. Then, the cellular telephone is moved from the ear to a position where the display of the cellular telephone can be clearly visualized, so that the user can start to operate the change-over key. Another problem associated with the conventional cellular telephone is a possibility that during the change-over operation, a user might push a wrong function key and thus undesirably start an unwanted operation on the cellular telephone.

Furthermore, when the above-described cellular telephone is used to perform not only a telephone communication but also an electronic commercial transaction and data transmission/reception through a global network such as an internet, a user is required to listen to an audio guidance transmitted from a remote person on the communication (hereinafter simply referred to as remote person), while at the same time confirming on the display the contents such as a homepage established by the remote end, forming a system requiring a user to operate various operation keys in accordance with the sound (audio) guidance.

As a result, even when a user is required to perform various operations on his or her cellular telephone, he or she has to at first put the receiver of the telephone at one of his or her ears (to hear the received talk by means of the receiver). Then, he or she has to operate the change-over key to select a loud-speaking mode using a loudspeaker, thereby enabling him or her to be in a hands-free condition.

Subsequently, the user has to perform various operations in accordance with audio guidance and display instructions. Accordingly, necessary operations for a user to perform on his or her cellular telephone is relatively troublesome.

Due to the above-mentioned troublesome operations, there is a possibility that during the change-over operation, a user might push a wrong function key and thus undesirably start an unwanted operation on the cellular telephone, rendering it difficult to ensure correct and appropriate electronic commercial transaction and data transmission/reception.

### SUMMARY OF THE INVENTION

An object of the present invention is to provide an improved portable information terminal device such as a cellular telephone having an improved convenience and an improved operability, thereby solving the aforementioned problems associated with the above-described prior art.

According to the present invention, there is provided a portable information terminal device having a receiver for reproducing a received talk in a relatively small volume and a loudspeaker for reproducing a received talk in a relatively large volume, said terminal device comprising: a memory for storing data of each remote person in communication with the terminal device, said data being used to set the receiver or the loudspeaker to reproduce a received talk; and a controller so formed that when a communication is performed between the terminal device and one remote person in communication with the terminal device, said controller will decide whether the receiver or the loudspeaker should be used to reproduce a received talk, all in accordance with the data stored in the memory.

Specifically, the memory has a recording area for storing data concerning a plurality of remote persons who will be in communication with the terminal device.

In particular, each set of data concerning one remote person is in the form of a telephone directory data table including a plurality of item data.

With the use of the portable information terminal device formed according to the present invention, since each remote person's data is stored which is for setting the receiver or the loudspeaker to reproduce a received talk, when there is a telephone communication between the user of this terminal device and a registered remote person, the terminal device will be automatically set so that a talk received from the remote person may be reproduced by the receiver or the loudspeaker in accordance with the stored data of the remote person.

For example, if a remote person is registered such that his or her talk will be reproduced by the loudspeaker, once there is a telephone communication between the registered person and the user of this terminal device, a received remote person's talk will be automatically reproduced by the loudspeaker, thereby allowing the user of this terminal device to continue his or her telephone communication in a hands-free state (without having to put the receiver against one of his or her ears).

### BRIEF DESCRIPTION OF THE DRAWINGS

These and other objects and advantages of the present invention will become clear from the following description with reference to the accompanying drawings, wherein:
Fig. 1 is a block diagram showing the constitution of a portable information terminal device formed according to the present invention.
Fig. 2 is an explanatory view showing the constitution of a data table of a telephone directory.
Fig. 3 is a flow chart showing an operation of the portable information terminal device formed according to the present invention.

### DETAILED DESCRIPTION OF THE PREFERRED EMBODIMENT

An embodiment of the present invention will be described below with reference to the accompanying drawings. However, as a typical example, the following description is based on a portable information terminal device such as a cellular telephone capable of performing a communication in a spectrum diffusion manner represented by CDMA communication method.

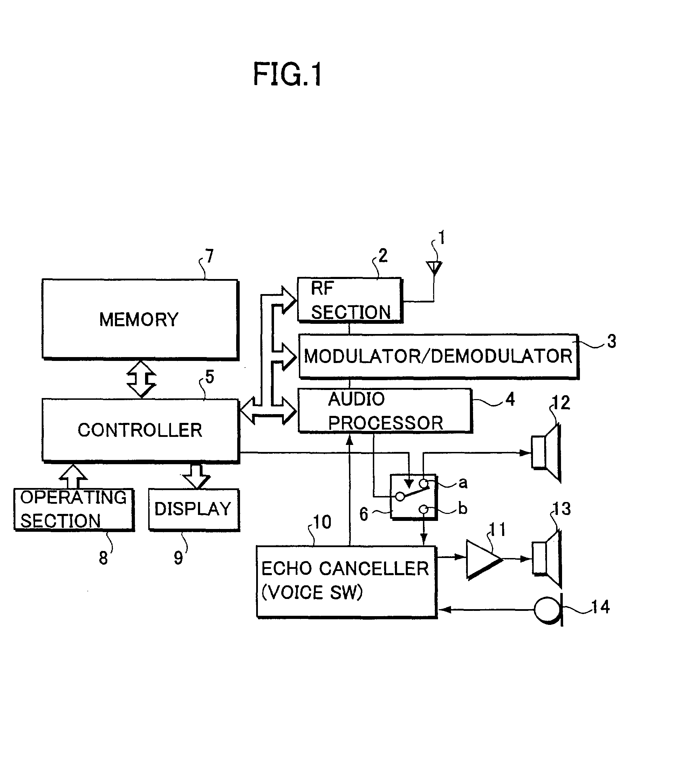

Fig. 1 is a block diagram showing the constitution of a portable information terminal device formed according to the present invention.

As shown in the block diagram, the portable information terminal device comprises a transmission/reception antenna 1, RF section 2, modulator/demodulator 3, an audio processor 4, a controller 5, and change-over section 6.

RF section 2 is provided so that during signal reception it can convert a received signal fed hereto through the transmission/reception antenna 1 into an intermediate wave signal which can be further processed, and supply the intermediate wave signal to the modulator/demodulator 3. The RF section 2 is also formed so that during signal transmission it can convert a transmission signal fed from the modulator/demodulator 3 in order for the transmission signal to have a frequency band suitable for transmission, and supply the converted signal to the antenna 1. In this way, a two-way communication system can thus be formed which can be used to perform telephone communication as well as data transmission/reception.

The modulator/demodulator 3 is provided to demodulate the intermediate wave signal fed from the RF section 2 so as to reproduce audio signal and video data (such as character data and image data) transmitted from a remote place, and also to modulate audio signal and video data to be transmitted to a remote place, and supply the modulated signal and data to the RF section 2.

The audio processor 4 is provided to convert the audio signal fed from the modulator/demodulator 3 into analogue audio signal in an audible frequency band and supply the converted signal to the change-over switch 6. Namely, when using CDMA communication method, digital audio signal is supplied from the modulator/demodulate 3 to the audio processor 4 in which the digital audio signal is converted into analogue audio signal in an audible frequency band. The analogue audio signal is then supplied to the change-over switch 6.

The controller 5 is provided to control the RF section 2, the modulator/demodulator 3, the audio processor 4 and the change-over section 6, as well as an overall operation of the portable information terminal device.

In detail, the controller 5 is connected with a memory section 7 formed by an over-writable non-volatile memory such as SRAM, an operating section 8 having a plurality of operating keys, a display 9 comprising a liquid crystal display. The operating section 8 and the display 9 are provided on the frame (not shown) of the portable information terminal device in a manner such that they are visible from outside.

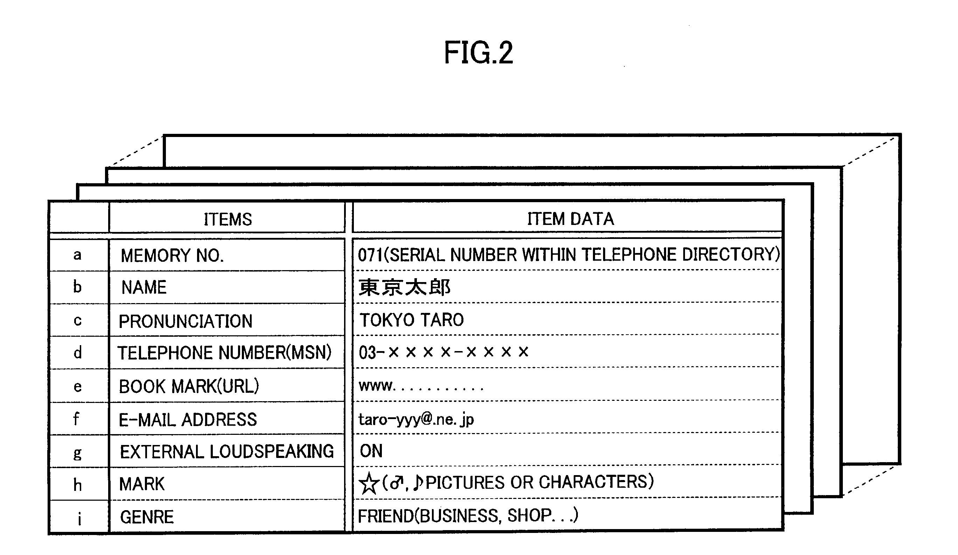

The memory 7 includes a plurality of recording areas (each being hereinafter referred to as "telephone directory data table" as shown in Fig. 2) having recorded therein communication data of a plurality of remote persons. Namely, each remote person is provided with one "telephone directory data table") registered in the memory 7, with each "telephone directory data table" including several information items.

In more detail, it is possible to record in each data table a "memory number" serving as data head for identifying a "telephone directory data table", the name of a remote person, the pronunciation of the person's name, the telephone number of the remote person, the E-mail address of the remote person, and the book mark of the remote person, as well as "external loudspeaking" for determining whether a receiver 12 or a loudspeaker 13 should be selected for reproducing a received talk.

Further, there are also provided items called "mark" and "genre" for classifying remote persons into different groups, so that it would be easy to search a remote person recorded in the telephone directory data tables.

For example, "mark" includes " 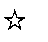 " , " , " etc. and "genre" includes "friend", "business", "shop" , etc. A user of the cellular telephone is allowed to select a "mark" and "genre" for each remote person, thereby classifying a plurality of remote persons into different groups and thus effecting a desired management.

Although it has been described in the above that "external loudspeaking" item is provided for determining whether the receiver 12 or the loudspeaker 13 should be selected for reproducing a received talk, such an "external loudspeaking" item can also be deleted because the same function can also be effected by properly setting the "mark" and "genre".

As to "mark", " 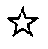 " may be provided to make "external loudspeaking" OFF, and " may be provided to make "external loudspeaking" ON. As to "genre", "friend" may be provided to make "external loudspeaking" OFF and "business" maybe provided to make "external loudspeaking" ON. In this way, these controls can be in advance incorporated into the portable information terminal device.

In the case where the display 9 is formed by a liquid crystal display capable of displaying in color, "mark" items may be set such that a red " 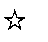 " is provided to make "external loudspeaking" OFF and a blue " 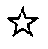 " is provided to make "external loudspeaking" ON. On the other hand, "genre" items may be set such that a red "friend" is provided to make "external loudspeaking" OFF and a blue "friend" is provided to make "external loudspeaking" ON. In this way, these controls can be in advance incorporated into the portable information terminal device, in a manner such that it is allowed to determine whether the receiver 12 or the loudspeaker 13 is to be selected for reproducing a received talk (all in accordance with the color of a "mark"), thereby providing an improved convenience.

For example, when an item "external loudspeaking" in a telephone directory data table of one remote person called "Tokyo Taro" is set at OFF, an item "mark" is set at " 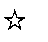 ", and an item "genre" is set at "friend", and when the communication line is connected with the remote person so that a telephone communication can be conducted, a received talk will be reproduced through the receiver 12. On the other hand, even when the item "external loudspeaking" is set at OFF, if the item "mark" is set at " and item "genre" is set at "business", a received talk will be reproduced through the loudspeaker 13 at the time the communication line is connected with the remote person and thus a telephone communication can be conducted.

Therefore, in accordance with thus preset items including "external loudspeaking", "mark" and "genre", it is possible to determine whether the receiver 12 or the loudspeaker 13 should be selected to reproduce a received talk.

However, the change-over between the receiver 12 and the loudspeaker 13 can be effected by the change-over section 6 under the control f the controller 5.

Further, various times included in a telephone directory data table shown in Fig. 2 are displayed on the display 9. Therefore, a user is allowed to perform the above-described selecting operation while at the same time watching the display 9.

Moreover, when the user operates the keys provided in the operating section 8 in accordance with a predetermined procedure, he or she is allowed to input various item data. At this time, the controller 5 operates to store the inputted item data in the memory 7, thereby making it possible to produce a telephone directory data table for each remote person.

Nevertheless, the items and item data shown in Fig. 2 form only one example which can be altered and into which new data can be added, in accordance with the designing specification of a portable information terminal device.

In practice, each portable information terminal device includes an echo canceller 10, a power amplifier 11, the receiver 12, the loudspeaker 13 and a microphone 14.

Here, the receiver 12 is used only when it is necessary for a user to put the receiver against one of his or her ears to hear a talk received from a remote person. In fact, such a receiver may be formed by a small-volume speaker and positioned on one side of the frame of the portable information device (cellular telephone).

The loudspeaker 13 is a speaker which enables a user to hear a talk received from a remote person even if the speaker is separated from his or her ears, and is disposed in a different position from the receiver 12. Here, an audio signal outputted from the audio processor 4 is fed to the loudspeaker 13 through the change-over switch 6, the echo canceller 10 and the power amplifier 11.

The microphone 14 is provided to collect a talk to be transmitted to a remote person, and is disposed on one end of the frame, in a manner such that when the receive 12 is put at one ear of the user, the microphone 14 will be located at his or her mouth.

The echo canceller 10 is provided to prevent an undesired howling phenomenon, so that when a user is in a so-called hands-free state, a received talk reproduced by the loudspeaker 13 will not be howled with a talk which is at first inputted into the microphone 14 and then transmitted to a remote person.

In this manner, once the change-over switch 6 is operated so that an audio signal from the audio processor 4 is changed over (changed-over to a contact a) to
the receiver 12 by virtue of the change-over action effected by the change-over switch 6 in accordance with the change-over control performed by the controller 5, the audio signal will be reproduced by the receiver 12 at a small volume in terms of the audio signal. Meanwhile, the loudspeaker 13 will be silent by shutting off the supply of the audio signal to the loudspeaker 13.

Further, once the change-over switch 6 is operated so that an audio signal from the audio processor 4 is changed over (changed-over to a contact b) to the echo canceller 10 by virtue of the change-over action produced by the change-over switch 6 in accordance with the change-over control performed by the controller 5, the audio signal will be reproduced by the speaker 13 in terms of the audio signal. Meanwhile, the receiver 12 will be silent by shutting off the supply of the audio signal to the receiver 12.

Namely, when the change-over switch 6 is changed over to the contact a, a user can put the receiver 12 at one of his or her ears to start a telephone communication by means of the receiver 12 as well as the microphone 14. On the other hand, when the change-over switch 6 is changed over to the contact b, it is allowed to start a telephone communication by listening to a talk received from a remote person and reproduced by the loudspeaker 13 (in a hands-free state or with the loudspeaker separated from the user' s ear), as well as by transmitting a talk through the microphone 14.

Further, although not shown in Fig. 1, the portable information terminal device of the present embodiment is formed with a connection jack for use in connection with an external earphone and an external microphone. For example, when a user wants to make a telephone communication while he or she is still driving an automobile, if an earphone/microphone including both an external earphone and an external microphone is connected to the connection jack, he or she is allowed to perform the telephone communication (by listening and talking) by means of the earphone/microphone without hampering his or her driving.

With the earphone/microphone in connection with the portable information terminal device (cellular telephone), the controller 5 can operate to detect a mechanical connection state with respect to the connection jack. Then, the controller 5 will effect a connection between the earphone/microphone and the audio processor 4, and stop the reproducing of a received talk through the receiver 12 and the loudspeaker 13, also stop the collecting of the user's voice through the microphone 14. Namely, if the earphone/microphone is connected with the connection jack, a telephone communication through the earphone/microphone will be set in preference to others. On the other hand, if the earphone/microphone is not connected with the connection jack, the information terminal device (cellular telephone) will operate to reproduce a received talk through the receiver 12 or the loudspeaker 13, and to collect the user's voice (to be transmitted to a remote person) through the microphone 14.

Although the above description was made to explain a portable information terminal device such as a cellular telephone having a hands-free function, the present invention can also be applied to a cellular telephone not having such a hands-free function. In this case, it is allowed to dispense with the echo canceller 10. Namely, the microphone 14 may be directly connected to the audio processor 4, while the contact b may be directly connected to an input terminal of the main amplifier 11.

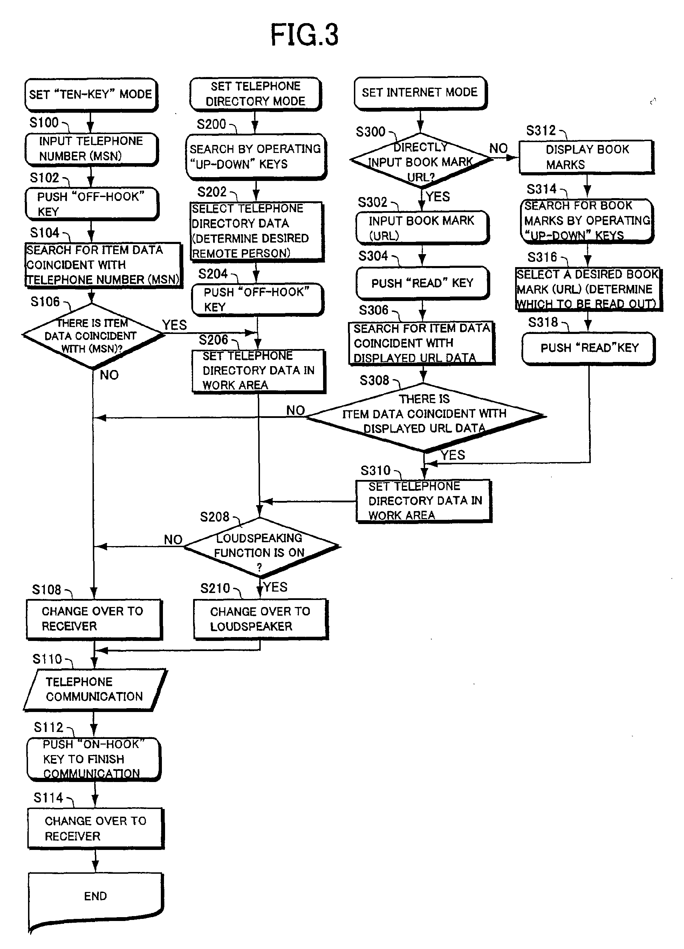

The basic operation of the portable information terminal device of the present embodiment will be described below with reference to a flow chart shown in Fig. 3.

In detail, the portable information terminal device is provided with a "ten-key mode" for directly inputting the telephone numbers of remote persons by operating the keys of the operating section 8, a "telephone directory mode" for selecting the telephone number of a remote person registered in the data table shown in Fig. 2, by operating only "up-down" keys. The portable information terminal device also includes an "internet mode" for setting internet connection. Therefore, once the user operates a mode change-over key in the operating section 8, the controller 5 will change the operation of the device over to a user's requested mode.

Now, the operation in accordance with the flow chart will be described in the following.

At first, the "ten-key mode" is set and the telephone number MSN of a remote person is inputted through the operation section 8 (step 100). Then, once an "off-hook" key is pushed (step 102), the controller 5 will operate to search from the telephone directory data table for an item data coincident with the inputted telephone number MSN (step 104). Namely, the controller 5 operates to search for a "telephone number" in the telephone directory data table registered for each remote person in a manner shown in Fig. 2.

Then, it is determined whether an item data coincident with the telephone number MSN has been searched out (step S106). If an item data coincident with the telephone number MSN has not been searched out (NO), the process goes to step S108 at which the change-over switch 6 is changed over to the contact a so as to supply a received talk to the receiver 12 . Afterwards, the process goes to step S110.

On the other hand, if an item data coincident with the telephone number MSN has been searched out (YES), the process goes to step S206 which sets in the work area of the controller 5 all the item data of the remote person' s telephone directory data table containing as an item data a "telephone number" coincident with an inputted telephone number MSN. Then, at step S208, it is determined whether an item data "external loudspeaking" of the telephone directory data table has been set to be ON. If an item data "external loudspeaking" of the telephone directory data table is not in ON state (NO), the process goes to step S108 at which the change-over switch 6 is changed over to the contact a, so as to supply a received talk to the receiver 12. Subsequently, the process goes to step S110. On the other hand, if an item data "external loudspeaking" of the telephone directory data table is in ON state (YES), the process goes to step S210 at which the change-over switch 6 is changed over to the contact b, so as to supply a received talk to the loudspeaker 13. After that, the process goes to step S110.

In this way, at step S108 or step S 210, once the change-over is performed so that a received talk is reproduced by either the receiver 12 or the loudspeaker 13, the user is allowed to perform a telephone communication with remote person at step S110.

Then, at the step S112 the user pushes an "on-hook" key so that the telephone communication is terminated. Afterwards, at step S114, the change-over switch 6 is changed over to contact a, thereby obtaining a so-called default state which allows reproducing a received talk through the receiver 12. Subsequently, the telephone communication is terminated.

However, even if an item data "external loudspeaking " is registered as OFF, the setting of other item datas including "mark" and "genre" of the "telephone directory data table" can make it possible not only to hear a received talk through the receiver 12, but also to hear a received talk through the loudspeaker 13.

The following description is given to explain the operation performed when the "telephone directory mode" has been set. Namely, once the "telephone directory mode" is set, the item data of the telephone directory data table will be displayed on the display 9. Then, a user can operate the "up-down" keys so that the item data of the telephone directory data table may be changed over from one remote person to another.

Under the condition of the "telephone directory mode", while watching the contents displayed on the display 9, the user can operate the "up-down" keys to search for his or her desired remote person (step S200). After a desired remote person (step S202) has been selected, the "on-hook" key is pushed (step S204) so that process goes to step S206.

At the step S206, all item data of the telephone directory data table of a selected remote person are set in the work area of the controller 5. Then, at step S208, it is inspected whether an item data "external loudspeaking" of the telephone directory data table has been set to be ON. If an item data "external loudspeaking" of the telephone directory data table is not in ON state (NO), the process goes to step S108 at which the change-over switch 6 is changed over to the contact a, so as to supply a received talk to the receiver 12. Subsequently, the process goes to step S110. On the other hand, if an item data "external loudspeaking" of the telephone directory data table is in ON state (YES), the process goes to step S210 at which the change-over switch 6 is changed over to the contact b, so as to supply a received talk to the loudspeaker 13. After that, the process goes to step S110.

In this way, once the change-over is performed so that a received talk can be reproduced by either the receiver 12 or the loudspeaker 13, the user is allowed to perform a telephone communication with a remote person at step S110.

Then, the user again pushes the "on-hook key so that the telephone communication is terminated at step 112. Afterwards, at step S114, the change-over switch 6 is changed over to contact a, thereby obtaining a so-called default state which allows reproducing a received talk through the receiver 12. Subsequently, the telephone communication is terminated.

In fact, this "telephone directory mode" is similar to the above "ten-key mode", i.e., even if an item data "external loudspeaking " is registered as OFF, the setting of other item data including "mark" and "genre" of the "telephone directory data table" makes it possible not only to hear a received talk through the receiver 12, but also to hear a received talk through the loudspeaker 13.

The following description is given to explain the operation performed when the "internet mode" has been set. Namely, once the "internet mode" is set, the user can, at the step S300, operate the keys in the operating section 8 so as to issue instruction for directly inputting book marks (URL) of a remote person or instruction for displaying the book marks (URL) registered in the telephone directory data table.

When an instruction for direct input is issued (YES), the process goes to step S302 to obtain data representing directly inputted book mark (URL). Then, the process goes to step S304 to confirm that a "read" key has been pushed. Afterwards, the process goes to step S306 to search the telephone directory data table (shown in Fig. 2) for an item data (book mark URL) coincident with the directly inputted book mark URL.

Then, it is determined whether an item data (book mark URL) coincident with the directly inputted book mark (URL) has been searched out (step S308). If an answer is NO, the above steps S108 - S114 are repeated. Namely, the change-over switch 6 is changed over to the contact a (step S108), thereby effecting (step S110) a communication connection in accordance with the directly inputted book mark (URL)

On the other hand, at step S308, if it is determined that an item data (book mark URL) coincident with the directly inputted book mark (URL) has been searched out, the process goes to step S310 which sets in the work area of the controller 5 all the item data of the remote person's telephone directory data table containing the searched-out book mark (URL). Then, at step S208, it is determined whether an item data "external loudspeaking" of the telephone directory data table has been set to be ON. Afterwards, step S108 or step S210 is executed in accordance with the result of the determination, so as to perform a setting for either reproducing a received talk through the receiver 12 or reproducing the received talk through the loudspeaker 13. Subsequently, steps S110 - S114 are executed.

Further, at step 300, when an instruction is issued for displaying book mark (URL) registered in the telephone directory data table, the process goes from step S300 to step S312.

At step S312, book marks registered in the telephone directory data table are displayed on the display 9. Then, a user can operate the "up-down" keys to search the displayed book marks for one desired book mark (Step S314) and thus selects the desired book mark (step S316). Subsequently, the predetermined "read" key is pushed (step S318) and the process goes to step S310. At this time, the controller 5 operates to store in the work area of the controller 5 all the item data of the remote person's telephone directory data table containing the selected book mark (URL).

Then, at step S208, it is determined whether an item data "external loudspeaking" stored in the work area of the controller 5 has been set in ON state. Afterwards, step S108 or step S210 is executed in accordance with the result of the determination so as to perform a setting for either reproducing a received talk through the receiver 12 or reproducing a received talk through the loudspeaker 13. Subsequently, steps S110 - S114 are executed.

In fact, this "internet mode" is similar to the above "ten-key mode" and "the telephone directory mode", i.e., even if an item data "external loudspeaking " is registered as OFF, the setting of other item datas including "mark" and "genre" of the "telephone directory data table" makes it possible not only to hear a received talk through the receiver 12, but also to hear a received talk through the loudspeaker 13.

In this way, the portable information terminal device formed according to the present embodiment has a plurality of telephone directory data tables each being capable of registering as ON an item data "external loudspeaking" for reproducing a received talk through the loudspeaker 13. Therefore, when a user performs a telephone communication with a remote person registered as ON, the operation of the terminal device will be automatically changed over so that a received talk will be reproduced by the loudspeaker 13. On the other hand, when a user performs a telephone communication with a remote person not registered as ON, the operation of the terminal device will be automatically changed over so that a received talk will be reproduced by the receiver 12. In this manner, a user is allowed to easily perform his or her desired telephone communication without having to perform a series of troublesome operations.

Therefore, when an internet is used to perform telephone banking to carry out an electronic settlement or an electronic transaction, or when data transmission/reception is conducted using the internet, a user is required to operate the keys in the operating section 8 in accordance with an audible guidance transmitted from a remote place. At this time, by registering ON (making it in ON state) an item data "external loudspeaker" in a telephone directory data table of a remote person who is allowed to perform an electronic settlement or an electronic transaction or data transmission/reception, the user of this terminal device can immediately be in a hands-free condition, ensuring an improved convenience for the user. As a result, it becomes possible to greatly reduce the occurrence of mistaken operations.

Further, since it is possible to register ON an item data "external loudspeaker" for each remote person, the user of this terminal device is allowed to have an improved freedom in connection.

Although the above description has been divided into two parts, with one explaining an oral communication while the other representing data transmission/reception using internet, it is also possible to establish a broadcast service so that once there is a communication between the user of this terminal device and a certain service provider, the loudspeaker 13 will be actuated immediately so as to automatically reproduce a received audio information.

In fact, the portable information terminal device of the present embodiment is so formed that if an item data "external loudspeaking" is registered ON, the loudspeaker 13 will operate at first. On the other hand, if the item data "external loudspeaking" is not registered ON, the receiver 12 will operate at first. As a result, the operation of the receiver 12 is in a default state. However, it is also possible that an item data called "receiver-on" may be registered for each remote person, so that if the item data "receiver-on" has not been registered, the loudspeaker 13 will operate at first.

For example, if a portable information terminal device is a personal information device such as a PDA (Personal Digital Assistant) having a desired portability and a communication function, since a user often operates the device in a hands-free condition, making the loudspeaker to operate earlier than other functions is useful for further improving the convenience when using the PDA.

In the case where an item data "receiver-on" for each remote person has been registered, if the loudspeaker 13 is still required to operate in preference to other functions, a necessary operation is only to move the change-over switch 6 to the contact b.

Although it has been described in the above that after step S318 is executed, the process goes to step S210 by way of step S310 and step S208 so as to actuate the loudspeaker 13, it is also possible for the process to go directly from the step S318 to step S210 so as to actuate the loudspeaker 13. Namely, since in "internet mode" a user often needs to operate a portable information terminal device in a hands-free condition, it is allowed to omit the step S108 (subsequent to step S318) for actuating the receiver 12, thereby allowing the process to go directly to the step 210 and thus actuating the loudspeaker 13.

When combined data including telephone number (MSN) and book mark (URL) is to be registered in the telephone directory data table, and when it is determined that telephone number (MSN) was not searched out at step S106 shown in Fig. 3, the process goes to step S108 or step S110 by way of steps subsequent to step S306, thereby making it possible to deal with the combined data including telephone number (MSN) and book mark (URL).

As discussed in the above, with the use of the present invention, since data is stored for each remote person to set the receiver or the loudspeaker to reproduce a received talk, when there is a communication between the user of the portable information terminal device and a remote person, it is possible to automatically set the receiver or the loudspeaker to reproduce a received talk , all in accordance with remote person's data stored in the memory. In this way, the user is allowed to conduct his or her desired telephone communication without having to perform some troublesome operations. Therefore, it has become possible to provide a portable information terminal device such as a cellular telephone having an improved convenience as well as an improved operability.

While the invention has been described in conjunction with preferred specific embodiment thereof, it will be understood that this description is intended to illustrate and not limit the scope of the invention.

## Claims

1. A portable information terminal device having a receiver (12) for reproducing a received talk in a relatively small volume and a loudspeaker (13) for reproducing a received talk in a relatively large volume, said terminal device comprising:
a memory (7) for storing data of each remote person in communication with the terminal device, said data being used to set the receiver (12) or the loudspeaker (13) to reproduce a received talk; and
a controller (5) so formed that when a communication is performed between the terminal device and one remote person in communication with the terminal device, said controller will decide whether the receiver (12) or the loudspeaker (13) should be used to reproduce a received talk, all in accordance with the data stored in the memory (7).

2. A portable information terminal device according to claim 1, wherein the memory (7) has a recording area for storing data concerning a plurality of remote persons who will be in communication with the terminal device.

3. A portable information terminal device according to claim 2, wherein each set of data concerning one remote person is in the form of a telephone directory data table including a plurality of item data.
